# EUROPEAN PATENT APPLICATION

(11) **EP 2 131 505 A1**
(43) Date of publication of application: **09.12.2009**
(21) Application number: 08703585.3
(22) Date of filing: 22.01.2008
(51) Int. Cl.: H04B 3/54

(54) **POWER LINE COMMUNICATION SYSTEM AND POWER LINE COMMUNICATION DEVICE**

(30) Priority: 26.03.2007 JP 2007078673
(71) Applicant: Sharp Kabushiki Kaisha, Osaka-shi, Osaka 545-8522 (JP)
(72) Inventor: HORI, Yasuhisa, Osaka 545 8522 (JP)
(74) Representative: Treeby, Philip David William
(86) International application number: PCT/JP2008/050735
(87) International publication number: WO 2008/117553

(57) **Abstract**

There is provided a power line communication device capable of outputting network data while preventing the network data from leaking to a power line. A PLC adapter (400), which is a mode of the power line communication device, includes a CPU (410), a plug (420), an AC-DC power supply conversion unit (421), a transformer (422), an analog front end (423), a power line modem (424), a filter (425), a RAM (426), a network controller (427), an RJ45 connector (428), and a ROM (430) for storing network data for power line communication. When sensing an output request of the network data, the CPU (410) starts a filtering operation by the filter (425), and inhibits the network data from being transmitted from the ROM (430) to the plug (420).

## Description

### TECHNICAL FIELD

The present invention relates to a power line communication, and particularly relates to a technique of adding a power line communication device to a network that uses a power line.

### BACKGROUND ART

A communication apparatus using a power line as a communication medium is referred to as a power line communication (PLC (Power Line Communication)) device, and has come into use from the viewpoints of easiness of setup, connectivity and scalability. However, pieces of information are superimposed on a power line in the power line communication, so that there may arise a problem, for example, in which an unintended power line communication device participates in the network from a neighboring residential building, an office building, and others, to intercept or utilize the communication. Accordingly, there is a demand for a mechanism for prohibiting easy participation in the network.

For example, Japanese Patent Laying-Open No. 2002-325079 (Patent Document 1) or Japanese Patent Laying-Open No. 2004-222312 (Patent Document 2) discloses a technique of preventing easy interception of communication by using a cryptographic key (house code) to encrypt the communication. Specifically, a power line communication device can participate in (be added to) a network by receiving a cryptographic key (house code) prescribed times within a prescribed time period when seeking to participate in the network or be added to the network.

Japanese Patent Laying-Open No. 2006-166272 (Patent Document 3) discloses a technique capable of establishing an internet environment in a simple and inexpensive manner, and managing pieces of information on a monitoring system in a centralized manner, in already-existing collective housing and the like.

Japanese Patent Laying-Open No. 2006-166273 (Patent Document 4) discloses a technique of providing security-enhanced communication and preventing connection of an unauthorized terminal. Specifically, according to the relevant technique, a headend unit sends a cryptographic key to a device permitted to participate in (be added to) the network, so that an unauthorized device is prevented from participating in the network.

Furthermore, Japanese Patent Laying-Open No. 04-068836 (Patent Document 5) discloses a technique of allowing a network device, which seeks to participate in (be added to) a network, to participate in (be added to) the network, by setting an address of the relevant network device, and causing each network device to store the relevant address of the relevant network device.
Patent Document 1: Japanese Patent Laying-Open No. 2002- 325079
Patent Document 2: Japanese Patent Laying-Open No. 2004-222312
Patent Document 3: Japanese Patent Laying-Open No. 2006-166272
Patent Document 4: Japanese Patent Laying-Open No. 2006-166273
Patent Document 5: Japanese Patent Laying-Open No. 04-068836

### DISCLOSURE OF THE INVENTION

### PROBLEMS TO BE SOLVED BY THE INVENTION

In a network that uses a power line as a communication medium, when a network device is to participate in (to be added to) the relevant network, it obtains data including a cryptographic key and others for connecting to the network (hereinafter also referred to as the "network data"), and others, via the relevant network, and uses the obtained network data to participate in (be added to) the relevant network.

However, the power line is also connected to a power line of a neighboring residential building and an office building, and thus there arises a problem in which the relevant network data leaks to another power line. A way to prevent leakage may be to provide a filter at a power line in each of the residential buildings and office buildings. However, an already-existing power line does not provide for additional incorporation of such a filter, so that setup of the filter is often difficult. Furthermore, power lines are laid in a wide area, and thus there also arises a problem in which high costs are required for the filter and its installation, and easy setup cannot be achieved.

Furthermore, there is also a case where power lines in the same area are used to form a plurality of networks. In this case, even if a filter is set up among power lines, security may not be ensured within the same power line because network data for participating in a certain network may be intercepted by a power line communication device identified as a member of another network.

The present invention has been made to solve the above-described problems, and an object of the present invention is to provide a power line communication system capable of obtaining data for participating in a network while maintaining security.

Another object of the present invention is to provide a power line communication device capable of obtaining data for participating in a network while maintaining security.

Still another object of the present invention is to provide a power line communication device capable of outputting data for participating in a network while maintaining security.

### MEANS FOR SOLVING THE PROBLEMS

To solve the above-described problems, according to an aspect of the present invention, there is provided a power line communication system including a first power line communication device, and a second power line communication device. The first power line communication device includes a first power supply unit for receiving a supply of power from a power line, a first storage unit for storing network data for connecting to a communication network which uses the power line, a first detection unit for detecting an output request of the network data, a first control unit for inhibiting the network data from being outputted from the power supply unit to an outside of the first power line communication device, in response to the output request, and an output unit for outputting the network data in response to an operation performed by the first control unit. The second power line communication device includes a second power supply unit for receiving a supply of power from the power line, a second detection unit for detecting an obtainment request of the network data, a second control unit for inhibiting data from being outputted from the second power supply unit to an outside of the second power line communication device, in response to the detection of the obtainment request, an obtainment unit for obtaining the network data from the outside of the second power line communication device, based on that the second control unit has inhibited the data from being outputted, a second storage unit for storing the network data obtained by the obtainment unit, and a communication unit for communicating with the communication network based on the network data.

Preferably, the first control unit interrupts a transmission path between the first storage unit and the first power supply unit.

Preferably, the second control unit interrupts a transmission path between the obtainment unit and the second power supply unit.

A power line communication device according to another aspect of the present invention includes: a power supply unit for receiving a supply of power from a power line; a storage unit for storing network data for connecting to a communication network which uses the power line; a detection unit for detecting an output request of the network data; a control unit for inhibiting the network data from being outputted from the power supply unit to an outside of the power line communication device, in response to the output request; and an output unit for outputting the network data in response to an operation performed by the control unit.

Preferably, the control unit interrupts a transmission path between the storage unit and the power supply unit.

Preferably, the power line communication device further includes a switching unit for switching between opening and closing of the transmission path between the storage unit and the power supply unit. The control unit causes the switching unit to change a state of the transmission path from a closed state to an opened state.

Preferably, the control unit includes a filter unit for dropping the network data from a signal transmitted to the power supply unit for transmission to the power line.

Preferably, the detection unit detects the output request based on a signal inputted to the power line communication device.

Preferably, the power line communication device further includes a manipulation unit for accepting manipulation on the power line communication device, and outputting a manipulation signal corresponding to the manipulation. The detection unit detects the output request based on the manipulation signal.

Preferably, the output unit includes a communication interface unit for accepting connection of a communication line, and outputting the network data. The communication interface unit outputs the network data based on that the network data has been inhibited from being outputted from the power supply unit to the outside of the power line communication device.

Preferably, the output unit includes a drive unit for writing the network data to a removable recording medium for storing data. The drive unit outputs the network data based on that the network data has been inhibited from being outputted from the power supply unit to the outside of the power line communication device.

Preferably, the output unit includes a display unit for displaying the network data. The display unit displays the network data based on that the network data has been inhibited from being outputted from the power supply unit to the outside of the power line communication device.

A power line communication device according to still another aspect of the present invention includes: a power supply unit for receiving a supply of power from a power line; a detection unit for detecting an obtainment request of network data for connecting to a communication network which uses the power line; a control unit for inhibiting data from being outputted from the power supply unit to an outside of the power line communication device, in response to the detection of the obtainment request; an obtainment unit for obtaining the network data from the outside of the power line communication device, based on that the control unit has inhibited the data from being outputted; a storage unit for storing the network data obtained by the obtainment unit; and a communication unit for communicating with the communication network based on the network data.

Preferably, the control unit interrupts a transmission path between the obtainment unit and the power supply unit.

Preferably, the power line communication device further includes a switching unit for switching between opening and closing of the transmission path between the obtainment unit and the power supply unit. The control unit causes the switching unit to change a state of the transmission path from a closed state to an opened state.

Preferably, the control unit includes a filter unit for dropping the network data from a signal transmitted to the power supply unit for transmission to the power line.

Preferably, the detection unit detects the obtainment request based on a signal inputted to the power line communication device.

Preferably, the power line communication device further includes a manipulation unit for accepting manipulation on the power line communication device, and outputting a manipulation signal corresponding to the manipulation. The detection unit detects the obtainment request based on the manipulation signal.

Preferably, the obtainment unit includes an interface unit for receiving connection of a communication line.

Preferably, the obtainment unit includes a drive unit for receiving attachment of a recording medium for storing data, and a read unit for reading out the network data from the recording medium based on that the data has been inhibited from being outputted.

Preferably, the obtainment unit includes a manipulation unit for receiving an input of an operational instruction to the power line communication device.

### EFFECTS OF THE INVENTION

According to the present invention, it becomes possible to obtain or output data for participating in a network while maintaining security.

### BRIEF DESCRIPTION OF THE DRAWINGS

Fig. 1 is a diagram that represents a configuration of a power line communication network 10 according to an embodiment of the present invention.
Fig. 2 is a diagram that represents a configuration of a communication network 200 configured at a house 110.
Fig. 3 is a block diagram that represents a configuration of a function implemented by communication network 200 including power line communication devices 111, 113.
Fig. 4 is a block diagram that represents a hardware configuration of a PLC adapter 400 functioning as power line communication device 111.
Fig. 5 is a diagram that conceptually represents a mode of data storage in a ROM 430 included in PLC adapter 400.
Fig. 6 is a block diagram that represents a hardware configuration of a PLC adapter 600 functioning as power line communication device 113.
Fig. 7 is a diagram that conceptually represents a mode of data storage in a ROM 630 included in PLC adapter 600.
Fig. 8 is a flowchart that represents a part of a series of operations executed by a CPU 610 in PLC adapter 600.
Fig. 9 is a sequence chart that represents communication performed between PLC adapter 400 and PLC adapter 600.
Fig. 10 is a sequence chart that represents a mode of pairing processing performed between PLC adapter 400 and PLC adapter 600.
Fig. 11 is a block diagram that represents a hardware configuration of a PLC adapter 1100 according to a first modification of the embodiment of the present invention.
Fig. 12 is a block diagram that represents a hardware configuration of a PLC adapter 1200 according to a second modification of the embodiment of the present invention.

### DESCRIPTION OF THE REFERENCE SIGNS

10: power line communication network, 100: utility pole, 101: high-voltage power distribution line, 102: transformer, 103, 104, 105: low-voltage power distribution line, 106, 210: incoming panel, 110, 120: house, 130: building, 111, 112, 113, 121, 122, 123, 141, 142, 151, 152, 260: power line communication device, 140, 150: floor, 200: communication network, 211: power meter, 212, 213: breaker, 220, 223: power line, 221, 222, 224, 225, 226, 227: receptacle, 230: personal computer, 240: lighting fixture, 250: television set, 262: LAN cable, 270: WAN router, 420, 620: plug.

### BEST MODES FOR CARRYING OUT THE INVENTION

An embodiment of the present invention will hereinafter be described with reference to the drawings. In the following description, the same parts are provided with the same reference characters, and have the same name and function as well. Therefore, the detailed description thereof will not be repeated.

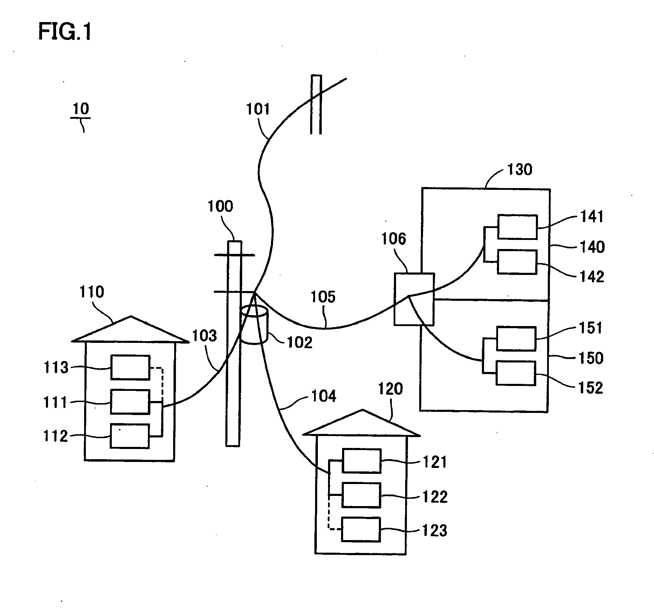

Initially, with reference to Fig. 1, description will be made on a power line communication network 10 according to an embodiment of the present invention. Fig. 1 is a diagram that represents a configuration of power line communication network 10. Power line communication network 10 includes a high-voltage power distribution line 101, a transformer 102, low-voltage power distribution lines 103, 104, and 105, an incoming panel 106, houses 110, 120, and a building 130. Transformer 102 is fixed to a utility pole 100.

High-voltage power distribution line 101 transmits a high-voltage current transmitted from an electric power substation (not shown) to transformer 102. Transformer 102 converts a voltage of the current into a low voltage intended for a distribution line, and distributes the low voltage current among low-voltage power distribution lines 103, 104, 105.

House 110 receives, via an incoming panel (not shown), a supply of the current transmitted through low-voltage power distribution line 103, and distributes the supply among power lines (also referred to as lamp lines) laid in the house. House 110 includes power line communication devices 111, 112, 113 as a home communication system. Power line communication devices 111 and 112 have already been connected to a power line provided in the house, and form a home local area network. Power line communication device 113 is identified as a power line communication device prepared for being connected to the relevant network, and has not yet been registered as a terminal of the relevant network.

Similarly, house 120 includes power line communication devices 121, 122, 123. Power line communication devices 121, 122 have already been connected to a power line laid in the house, and form a home communication network. Power line communication device 123 is identified as a power line communication device prepared for being newly connected to the relevant network. By being connected to the power line, power line communication devices 121, 122, 123 receive a supply of power transmitted through low-voltage power distribution line 104, and operate as power line communication devices. Power line communication devices 121, 122 perform data communication via the power line, as described below.

Similarly, building 130 receives a supply of power via incoming panel 106 through low-voltage power distribution line 105. Building 130 is made of, for example, two floors. A floor 140 located at the second floor is provided with power line communication devices 141, 142. Power line communication devices 141, 142 receive a supply of power distributed by incoming panel 106. Power line communication devices 141 and 142 perform data communication via the power line.

Similarly, a floor 150 at the first floor is provided with power line communication devices 151, 152. Power line communication devices 151, 152 receive a supply of power from incoming panel 106 to operate as power line communication devices, and perform data communication.

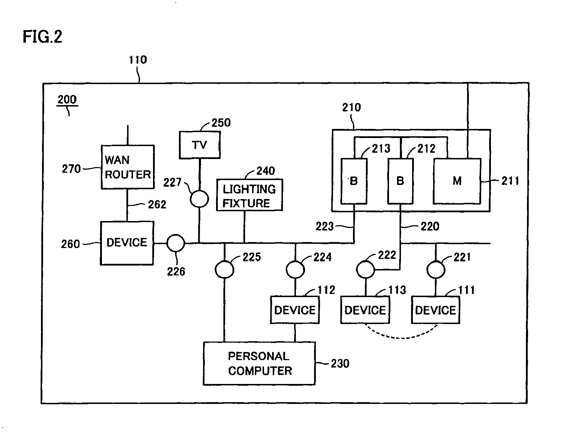

With reference to Fig. 2, description will be made on a communication network that uses the power line communication device according to the embodiment of the present invention. Fig. 2 is a diagram that represents a configuration of a communication network 200 configured at house 110. Communication network 200 is configured, for example, as a LAN (Local Area Network). However, communication network 200 may also be implemented as a configuration capable of communicating with another network, by connecting a gateway device (not shown) thereto.

Communication network 200 includes power line communication devices 111, 112, 113, 260, an incoming panel 210, power lines 220, 223, a personal computer 230, a lighting fixture 240, a television set 250, and a WAN (Wide Area Network) router 270. Personal computer 230 is connected to power line communication device 112.

Incoming panel 210 includes a power meter 211 and breakers 212, 213. Incoming panel 210 and power line communication device 111 are connected by power line 220. Power line communication device 111 is connected to a receptacle 221.

Power line communication device 113 is connected to a receptacle 222. Power line communication device 113 does not participate in communication network 200 at present. Power line communication device 113 obtains data for participating in communication network 200 from power line communication device 111, and then participates in communication network 200.

Receptacles 224, 225, 226, and 227 are connected to power line 223. Power line communication device 112 is connected to receptacle 224, and receives a supply of power from incoming panel 210. Personal computer 230 is connected to receptacle 225. Lighting fixture 240 receives a supply of power from incoming panel 210 through power line 223, and emits light. Television set 250 is connected to receptacle 227. Power line communication device 260 is connected to receptacle 226. Power line communication device 260 and WAN router 270 are connected by a LAN cable 262.

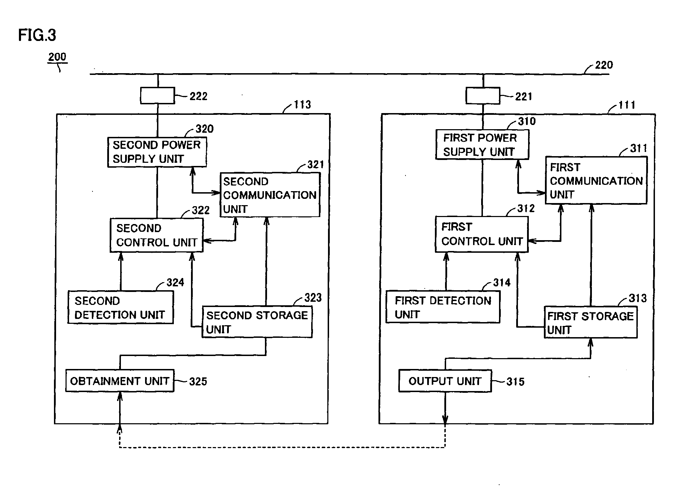

Next, with reference to Fig. 3, description will further be made on the configuration of communication network 200 according to the present embodiment. Fig. 3 is a block diagram that represents a configuration of a function implemented by communication network 200 including power line communication devices 111 and 113. Communication network 200 includes power line communication device 111 and power line communication device 113. For simplifying the description, Fig. 3 shows power line communication devices 111, 113. However, another power line communication device having a similar function may also be used.

Power line communication device 111 includes a first power supply unit 310, a first communication unit 311, a first control unit 312, a first storage unit 313, a first detection unit 314, and an output unit 315. First power supply unit 310 receives a supply of power through power line 220, and transmits a signal. First communication unit 311 communicates with another power line communication device (e.g. power line communication device 113) via first power supply unit 310, based on data stored in first storage unit 313. First storage unit 313 stores network data for connecting to communication network 200 that uses power line 220. First detection unit 314 detects an output request of the network data. In response to the output request, first control unit 312 inhibits the network data from being outputted from first power supply unit 310 to an outside of power line communication device 111. In response to the relevant inhibition operation by first control unit 312, output unit 315 outputs the network data.

In a certain aspect, first control unit 312 electrically interrupts a transmission path between first storage unit 313 and first power supply unit 310. In another aspect, power line communication device 111 may include a switch for switching between opening and closing of the transmission path between first storage unit 313 and first power supply unit 310. First control unit 312 changes the state of the relevant transmission path from a closed state to an opened state by controlling the switch.

In another aspect, first control unit 312 includes a filter circuit for dropping the relevant network data from a signal transmitted to first power supply unit 310 for transmission to power line 220.

In a certain aspect, first detection unit 314 detects the output request described above, based on a signal inputted to power line communication device 111. In another aspect, power line communication device 111 further includes a manipulation unit for receiving an input of manipulation to the relevant device and outputting a signal corresponding to the manipulation. First detection unit 314 detects the output request described above, based on the signal corresponding to the manipulation.

In another aspect, output unit 315 includes a communication interface for accepting connection of a communication line (e.g. a LAN cable) and outputting the network data described above. Based on that the network data has been inhibited from being outputted from first power supply unit 310 to an outside of power line communication device 111, the relevant communication interface outputs the relevant network data to the outside of power line communication device 111.

In another aspect, output unit 315 is also implemented as a drive unit for writing the network data to a removable recording medium for storing data. In that case, based on that the network data has been inhibited from being outputted from first power supply unit 310 to the outside of power line communication device 111, the drive unit outputs the relevant network data to the relevant recording medium. In this case, the recording medium is implemented as a medium capable of electrically or optically saving a signal, the medium including a flash memory and others.

In still another aspect, output unit 315 is also implemented as a display device for displaying the network data. Specifically, based on that the network data has been inhibited from being outputted from first power supply unit 310 to the outside of power line communication device 111, the relevant display device displays the network data. The display device is specifically implemented as an LCD (Liquid Crystal Display) device or an organic EL (Electro Luminescence) panel.

With reference to Fig. 3 again, power line communication device 113 includes a second power supply unit 320, a second communication unit 321, a second control unit 322, a second storage unit 323, a second detection unit 324, and an obtainment unit 325.

Second power supply unit 320 receives a supply of power through power line 220, and transmits a signal. Second communication unit 321 communicates with another power line communication device (e.g. power line communication device 111) via second power supply unit 320, based on data stored in second storage unit 323, and in accordance with control provided by second control unit 322.

Second control unit 322 controls an operation of hardware that configures power line communication device 113, based on data or a program stored in second storage unit 323. More specifically, second control unit 322 performs processing for inhibiting data from being outputted from second power supply unit 320 to an outside of power line communication device 113, in response to an obtainment request detected by second detection unit 324. Second detection unit 324 detects the obtainment request of the network data for connecting to communication network 200 that uses power line 220.

Obtainment unit 325 obtains the network data from the outside of power line communication device 113, based on that second control unit 322 has inhibited the data from being outputted.

Second storage unit 323 stores the relevant network data obtained by obtainment unit 325. Further, second storage unit 323 stores, in a nonvolatile manner, control data that includes a program and others for implementing an operation predefined as to power line communication device 113.

Preferably, second control unit 322 electrically interrupts a transmission path between obtainment unit 325 and first power supply unit 320. In a certain aspect, power line communication device 113 may include a switch for switching between opening and closing of the transmission path between obtainment unit 325 and second power supply unit 320. In response to the detection of the obtainment request of the network data described above, second control unit 322 causes the relevant switch to change the state of the transmission path from a closed state to an opened state.

In another aspect, second control unit 322 may include a filter unit for dropping the relevant network data from a signal transmitted to second power supply unit 320 for transmission to power line 220.

In another aspect, second detection unit 324 detects the obtainment request described above, based on a signal inputted to power line communication device 113. In another aspect, power line communication device 113 further includes a manipulation unit for accepting manipulation on the relevant device and outputting a signal corresponding to the manipulation. The relevant manipulation unit is implemented as, for example, a push button, a touch panel, or the like. Second detection unit 324 detects the obtainment request described above, based on the signal.

In another aspect, obtainment unit 325 is implemented as an interface for receiving connection of a communication line. More specifically, obtainment unit 325 is implemented as a jack for receiving attachment of a transmission cable, examples of which include a LAN cable and others, and a communication card for performing communication via the relevant cable.

In another aspect, obtainment unit 325 is implemented as a drive for reading data from an electrical storage medium, examples of which include a flash memory and others, or an optical storage medium, examples of which include a CD-ROM (Compact-Disk Read Only Memory) and others.

In still another aspect, obtainment unit 325 is implemented as a manipulation unit for receiving an input of an operational instruction to power line communication device 113. More specifically, the relevant manipulation unit is implemented as an input device, examples of which include a push button, a photoreceptor element for receiving a control signal outputted from a remote control terminal (not shown), a numeric keypad, and others. In this case, obtainment unit 325 stores the control data, which is specified from the signal inputted as such, in a region reserved in advance in second storage unit 323.

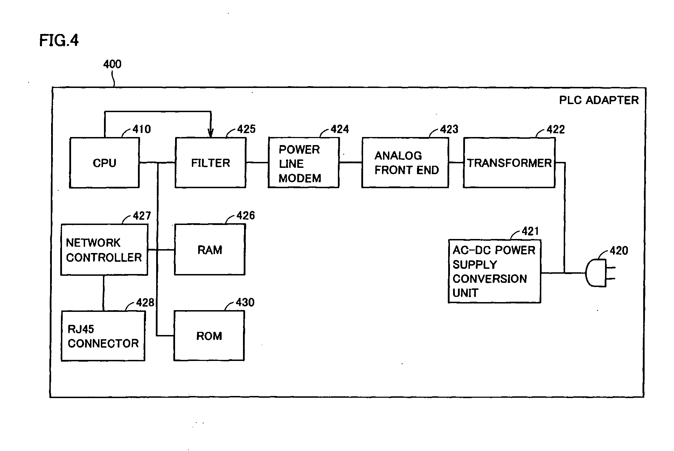

Next, with reference to Fig. 4, description will be made on a practical configuration of power line communication device 111 according to the present embodiment. Fig. 4 is a block diagram that represents a hardware configuration of a PLC (Power Line Communication) adapter 400 functioning as power line communication device 111. PLC adapter 400 includes a CPU (Central Processing Unit) 410, a plug 420, an AC-DC (Alternating Current-Direct Current) power supply conversion unit 421, a transformer 422, an analog front end 423, a power line modem 424, a filter 425, a RAM (Random Access Memory) 426, a network controller 427, an RJ45 connector 428, and a ROM (Read Only Memory) 430.

CPU 410 executes processing for causing PLC adapter 400 to function as a power line communication device. Specifically, CPU 410 executes an instruction provided by a program stored in ROM 430. Further, as described below, CPU 410 executes processing for outputting the data for participating in communication network 200 to an outside of PLC adapter 400.

Plug 420 is connected to receptacle 221 and receives a supply of power through power line 220.

AC-DC power supply conversion unit 421 converts an alternating current transmitted through power line 220 into a direct current, and supplies the direct current to each element in PLC adapter 400. Transformer 422 operates based on a signal transmitted from analog front end 423, and delivers to plug 420 a signal to be transmitted to communication network 200. Analog front end 423 converts a signal transmitted from power line modem 424 into an analog signal, and amplifies the converted signal. Furthermore, analog front end 423 uses the amplified signal to drive transformer 422.

Power line modem 424 is located between filter 425 and analog front end 423. Power line modem 424 modulates a signal outputted from CPU 410, and delivers the modulated signal to analog front end 423. Power line modem 424 demodulates a signal transmitted from analog front end 423, and delivers the demodulated data to CPU 410. Filter 425 interrupts the data to be used for a communication network that uses communication network 200, based on an instruction outputted from CPU 410.

RAM 426 temporarily saves data generated by CPU 410, or data obtained from the outside of PLC adapter 400. ROM 430 stores data and a program prepared in advance for implementing PLC adapter 400. A data structure in ROM 430 will be described below.

Network controller 427 provides control for communicating data outputted from CPU 410 via a cable (not shown) connected to RJ45 connector 428. Network controller 427 is implemented as, for example, an Ethernet (®) controller. RJ45 connector 428 receives attachment of a transmission cable, examples of which include an Ethernet (®) cable and others. It is noted that the configuration of the communication interface implemented by network controller 427 and RJ45 connector 428 is not limited to the one described above.

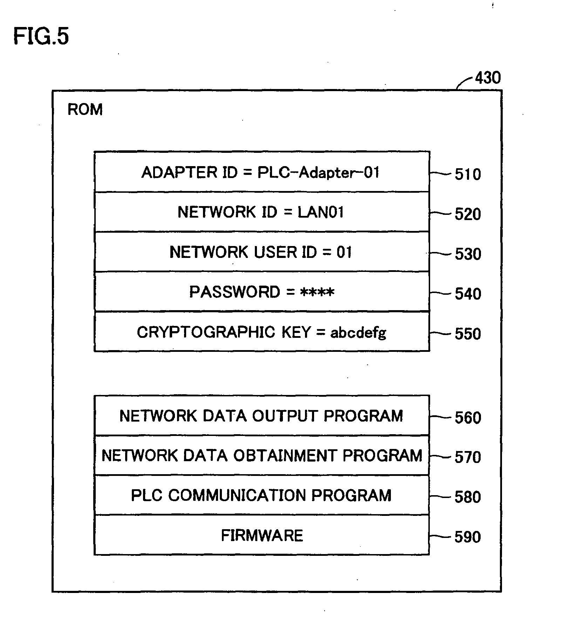

Next, with reference to Fig. 5, description will be made on a data structure of PLC adapter 400 according to the present embodiment. Fig. 5 is a diagram that conceptually represents a mode of data storage in ROM 430 included in PLC adapter 400. ROM 430 includes a plurality of memory regions for storing data. An adapter ID (Identification) for identifying PLC adapter 400 is stored in a memory region 510. A network ID for identifying communication network 200 in which PLC adapter 400 participates is stored in a memory region 520. A network user ID for specifying a user in communication network 200 of PLC adapter 400 is stored in a memory region 530. A password used for performing communication in communication network 200 while ensuring confidentiality is stored in a memory region 540. A cryptographic key for performing cryptographic communication is stored in a memory region 550.

Further, ROM 430 saves a program inputted by a manufacturer of PLC adapter 400 or a user of PLC adapter 400. Specifically, a network data output program for providing data for participating in communication in communication network 200 that uses power line 220 (i.e. network data), to another power line communication device, is stored in a memory region 560. In contrast, a network data obtainment program for implementing processing for causing the relevant power line communication device to obtain the network data from another power line communication device is stored in a memory region 570. A PLC communication program for performing communication via power line 220 is stored in a memory region 580. A firmware for executing a basic operation of PLC adapter 400 is stored in a memory region 590.

It is noted that these pieces of data and programs may be changeable, and may also be saved among a plurality of memories in a distributed manner.

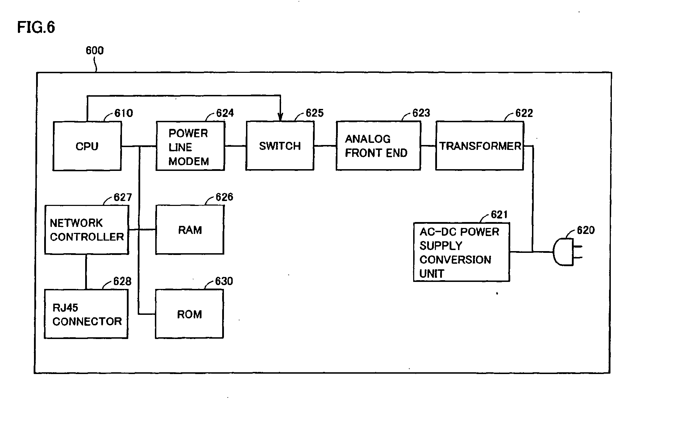

Next, with reference to Fig. 6, description will be made on a practical configuration of power line communication device 113 according to the present embodiment. Fig. 6 is a block diagram that represents a hardware configuration of a PLC adapter 600 functioning as power line communication device 113. PLC adapter 600 includes a CPU 610, a plug 620, an AC-DC power supply conversion unit 621, a transformer 622, an analog front end 623, a power line modem 624, a switch 625, a RAM 626, a network controller 627, an RJ45 connector 628, and a ROM 630.

CPU 610 executes an instruction for causing PLC adapter 600 to function as a power line communication device, and controls each piece of hardware. It is noted that most of the functions implemented by PLC adapter 600 are similar to the functions implemented by PLC adapter 400 shown in Fig. 4. Specifically, plug 620 operates similarly to plug 420 AC-DC power supply conversion unit 621 operates similarly to AC-DC power supply conversion unit 421. Transformer 622 operates similarly to transformer 422. Analog front end 623 operates similarly to analog front end 423. Power modem 624 operates similarly to power line modem 424. Network controller 627 operates similarly to network controller 427. RJ45 connector 628 operates similarly to RJ45 connector 428.

RAM 626 temporarily saves data generated by CPU 610 or data inputted to PLC adapter 600. ROM 630 stores data and a program prepared in advance for implementing PLC adapter 600. A data structure in ROM 630 will be described below.

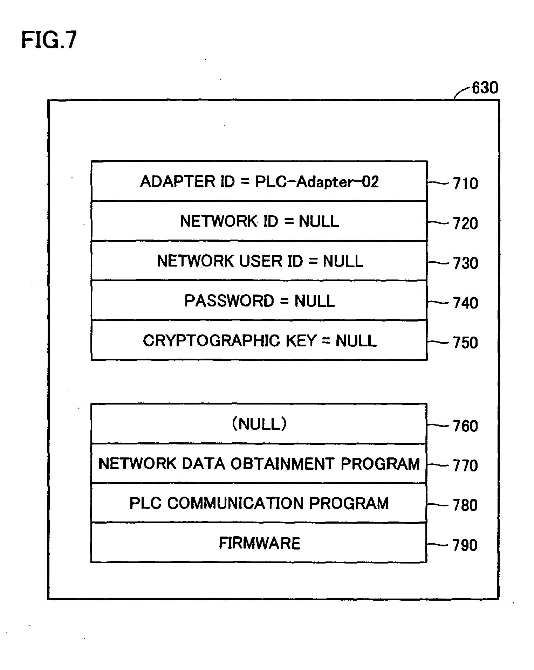

With reference to Fig. 7, description will be made on a data structure of PLC adapter 600. Fig. 7 is a diagram that conceptually represents a mode of data storage in ROM 630 included in PLC adapter 600. ROM 630 includes a plurality of memory regions for storing data.

Data for identifying PLC adapter 600 ("PLC-Adapter-02") is stored in a memory region 710.

Data for identifying a communication network in which PLC adapter 600 is to participate participates is stored in a memory region 720. It is noted that PLC adapter 600 has not yet participated in communication network 200 at present. Therefore, memory region 720 stores the data "NULL", which represents that the data has no content at present.

A network user ID that represents a user in the network of PLC adapter 600 is stored in a memory region 730. This region also stores the data "NITLL", which represents that no data exists until PLC adapter 600 participates in communication network 200. When network data obtainment processing, which will be described below, is executed, these pieces of data are written to these memory regions, respectively.

A password used in communication that uses communication network 200 is stored in a memory region 740. A cryptographic key for performing cryptographic communication is stored in a memory region 750.

ROM 630 further stores a program executed by PLC adapter 600. Specifically, a program for obtaining network data for participating in communication network 200 that uses power line 220 is stored in a memory region 770. This program is executed by CPU 610.

A program for communicating with another power line communication device (e.g. PLC adapter 400 functioning as power line communication device 111) connected to power line 220, after the network data is obtained, is stored in a memory region 780. A firmware for controlling a basic operation of PLC adapter 600 is stored in a memory region 790.

When PLC adapter 600 communicates with PLC adapter 400 to thereby obtain the network data, the obtained pieces of data are stored in memory regions 720, 730, 740, and 750, respectively. After obtaining the network data, PLC adapter 600 can participate in a specific communication network (e.g. communication network 200), and can communicate with another power line communication device (e.g. PLC adapter 400) via power line 220.

In another aspect, PLC adapter 600 may have a program for providing network data owned by itself to another power line communication device. Specifically, when the above-described network data is obtained by PLC adapter 600, the relevant program may also be obtained simultaneously. In this case, the obtained program is stored in memory region 760. As a result, as shown in memory region 560 in Fig. 5, for example, the network data output program is also stored in memory region 760. By doing so, PLC adapter 600 can subsequently provide the network data in accordance with a request from another device, similarly to PLC adapter 400.

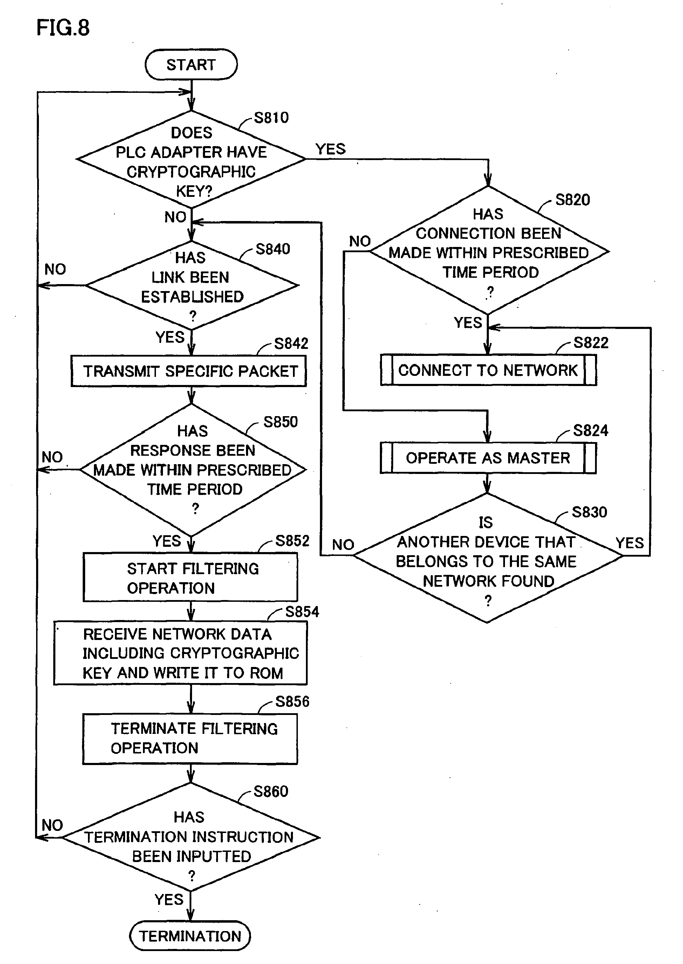

Next, with reference to Fig. 8, description will be made on a control structure of PLC adapter 600 according to the present embodiment. Fig. 8 is a flowchart that represents a part of a series of operations executed by CPU 610 in PLC adapter 600.

In step S810, CPU 610 determines whether or not PLC adapter 600 has a cryptographic key. This determination is made by, for example, referring to a memory region (memory region 750) in ROM 630. When determining that PLC adapter 600 has a cryptographic key (YES in step S810), CPU 610 switches the control to step S820. If not so (NO in step S810), CPU 810 switches the control to step S840.

In step S820, CPU 610 determines whether or not connection to another power line communication device (e.g. PLC adapter 400) has been established within a predefined time period. This determination is made based on, for example, whether or not an ACK signal, which represents establishment of the communication, has been received from another power line communication device. If CPU 610 determines that communication to another power line communication device has been established (YES in step S820), CPU 610 switches the control to step S822. If not so (NO in step S820), CPU 610 switches the control to step S824.

In step S822, CPU 610 executes predefined communication processing to thereby connect to communication network 200. Afterwards, PLC adapter 600 can communicate with PLC adapter 400 via power line 220.

In step S824, CPU 610 executes processing for causing PLC adapter 600 to function as a master device in communication network 200. Here, the master device refers to a power line communication device that has a function of controlling communication in communication network 200. Controlling the communication includes transmitting network data for participating in communication network 200 (i.e. a network ID, a cryptographic key, and others) in accordance with a transmission request, registering a power line communication device that is to participate in communication network 200, and the like. More specifically, CPU 610 outputs a predefined beacon signal to thereby check whether or not another power line communication device exists on communication network 200. When receiving a signal from another power line communication device, CPU 610 transmits network data, allocates identification data effective on the network to the power line communication device, and others, in accordance with a control code included in the signal.

In step S830, CPU 610 determines whether or not another power line communication device that belongs to the same communication network 200 has been found. When determining that such a device has been found (YES in step S830), CPU 610 switches the control to step S822. If not so (NO in step S830), CPU 610 switches the control to step S840.

In step S840, CPU 610 executes the network data obtainment program (memory region 770) to thereby establish a link with another power line communication device (e.g. PLC adapter 400). When determining that the link has been established (YES in step S840), CPU 610 switches the control to step S842. If not so (NO in step S840), CPU 610 switches the control back to step S810.

In step S842, CPU 610 controls network controller 627, and transmits a packet predefined for obtaining network data, to a communication cable connected to RJ45 connector 628. The relevant packet includes, for example, a header portion and a user data portion. The user data portion includes a transmission request of network data required for participating in communication network 200.

In step S850, CPU 610 determines whether or not a response has been made within a predefined time period, based on an output from network controller 627. If determining that the response has been made within the time period (YES in step S850), CPU 610 switches the control to step S852. If not so (NO in step S850), CPU 610 switches the control back to step S810.

In step S852, CPU 610 starts a filtering operation for inhibiting an output of the network data in PLC adapter 600. More specifically, CPU 610 transmits a switching signal to switch 625 to thereby electrically interrupt the transmission path between power line modem 624 and analog front end 623. As a result, data transmission from power line modem 624 to analog front end 623 is inhibited.

In step S854, CPU 610 senses that network data (e.g. a network ID, a password, a cryptographic key) has been received via network controller 627. CPU 610 temporarily writes these pieces of data to a region reserved in RAM 626, and then writes these pieces of data in regions reserved in ROM 630 (memory regions 720, 740, 750).

In step S856, CPU 610 terminates the filtering operation by switch 625, based on the completion of writing of the network data. Specifically, CPU 610 transmits a switching signal to switch 625 to thereby cause switch 625 to switch the transmission path between power line modem 624 and analog front end 626 to be in a closed state (i.e. a state that allows signal transmission).

In step S860, CPU 610 determines whether or not a termination instruction has been inputted, based on a signal provided from an outside of PLC adapter 600. If determining that the termination instruction has been inputted (YES in step S860), CPU 610 terminates the control. If not so (NO in step S860), CPU 610 switches the control back to step S810.

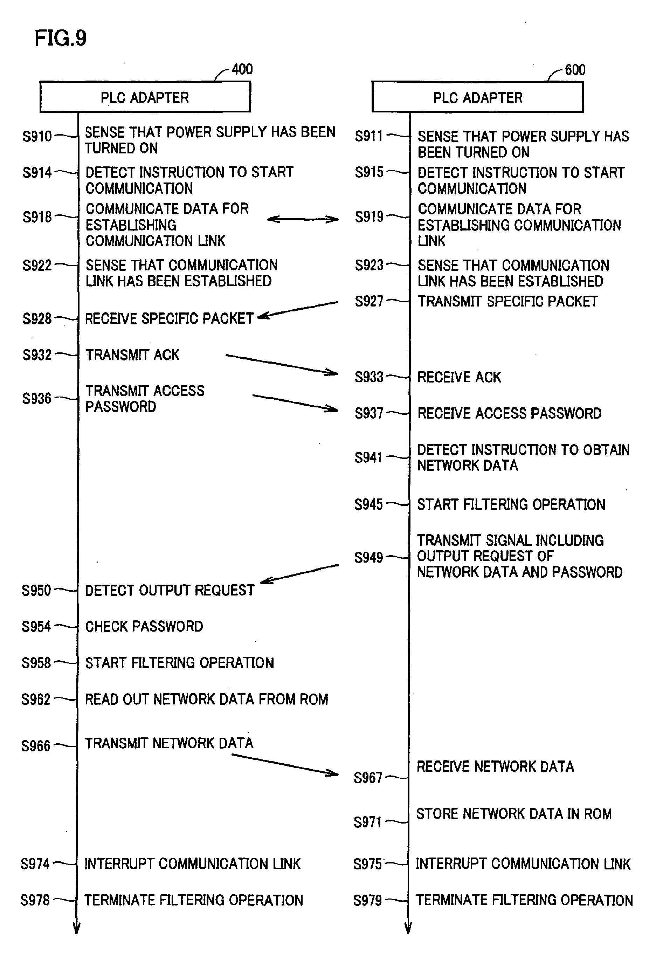

Next, with reference to Fig. 9, description will be made on communication between the power line communication devices according to the present embodiment. Fig. 9 is a sequence chart that represents the communication performed between PLC adapter 400 and PLC adapter 600.

In step S910, CPU 410 in PLC adapter 400 senses that a power supply has been turned on. In step S911, CPU 610 in PLC adapter 600 senses that a power supply has been turned on.

In step S914, CPU 410 detects an instruction to start communication via RJ45 connector 428. In step S915, CPU 610 detects an instruction to start communication via RJ45 connector 628.

In step S918, CPU 410 communicates data for establishing a communication link with another power line communication device (e.g. PLC adapter 600). In step S919, CPU 610 communicates data for establishing a communication link with another power line communication device (e.g. PLC adapter 400).

In step S922, CPU 410 senses that the communication link has been established. In step S923, CPU 610 senses that the communication link has been established.

In step S927, CPU 610 transmits a specific predefined packet to PLC adapter 400. In step S928, CPU 410 senses that the relevant specific packet has been received, based on a signal transmitted from network controller 427.

In step S932, CPU 410 transmits to PLC adapter 600 a signal (ACK signal) that represents that the reception has been confirmed. In step S933, CPU 610 senses that the ACK signal has been received.

In step S936, CPU 410 transmits a password stored in ROM 430 (e.g. a password stored in memory region 540). In step S937, CPU 610 senses that the password transmitted from PLC adapter 400 has been received.

In step S941, CPU 610 detects an instruction to obtain network data. For example, if a value of a network ID (memory region 720) in ROM 630 is NULL, CPU 610 detects an instruction to obtain network data. In step S945, CPU 610 transmits to switch 625 a switching signal to thereby start a filtering operation in PLC adapter 600.

In step S949, CPU 610 generates a signal including an output request of network data, and transmits the relevant signal and a predefined password (or the password received in step S937) to PLC adapter 400. In step S950, CPU 410 senses that the output request of network data has been received, based on an output from network controller 427.

In step S954, CPU 410 checks whether or not the signal transmitted from PLC adapter 600 includes a password that matches with the predefined password (e.g. the password stored in memory region 540). When determining that the same password has been transmitted, CPU 410 starts in step S958 a filtering operation in PLC adapter 400. More specifically, CPU 410 transmits a switching signal to filter 425 to thereby start filtering processing for eliminating the relevant network data from a signal transmitted to the transmission path between ROM 430 and power line modem 424.

In step S962, CPU 410 reads out network data (e.g. memory regions 520, 540, 550) from ROM 430, and writes it to a region temporarily reserved in RAM 426 for transmission. CPU 410 uses the data to generate packet data for transmission.

In step S966, CPU 410 transmits the packet data, which has been generated from the data written to RAM 426, to the outside of PLC adapter 400 via network controller 427. The data is transmitted to PLC adapter 600 via a cable (not shown). In step S967, CPU 610 senses that the network data has been received from PLC adapter 400.

In step S971, CPU 610 stores the pieces of data in the regions (e.g. memory regions 720, 740, 750) predetermined in ROM 630, respectively. By doing so, PLC adapter 600 has now obtained the data for participating in communication network 200.

In step S974, CPU 410 in PLC adapter 400 interrupts the communication link, based on that data transmission to PLC adapter 600 has been completed, or based on that a reception confirmation signal has been received from PLC adapter 600. In step S975, CPU 610 interrupts the communication link with PLC adapter 400, based on that the network data obtained from PLC adapter 400 has been stored in ROM 630.

In step S978, CPU 410 transmits a switching signal to filter 425 to thereby terminate the filtering operation to the network data in PLC adapter 400. Specifically, CPU 410 switches the transmission path between ROM 430 and power line modem 424 to be in an electrically-connected state. By doing so, data stored in ROM 430 can also be communicated.

In step S979, CPU 610 transmits a switching signal to switch 625 to thereby terminate the filtering operation in PLC adapter 600. Specifically, CPU 610 switches the state of the transmission path between power line modem 624 and analog front end 623 from an opened state to a closed state. By doing so, plug 620 and power line modem 624 are electrically connected to each other, resulting in that the signal can be received and transmitted.

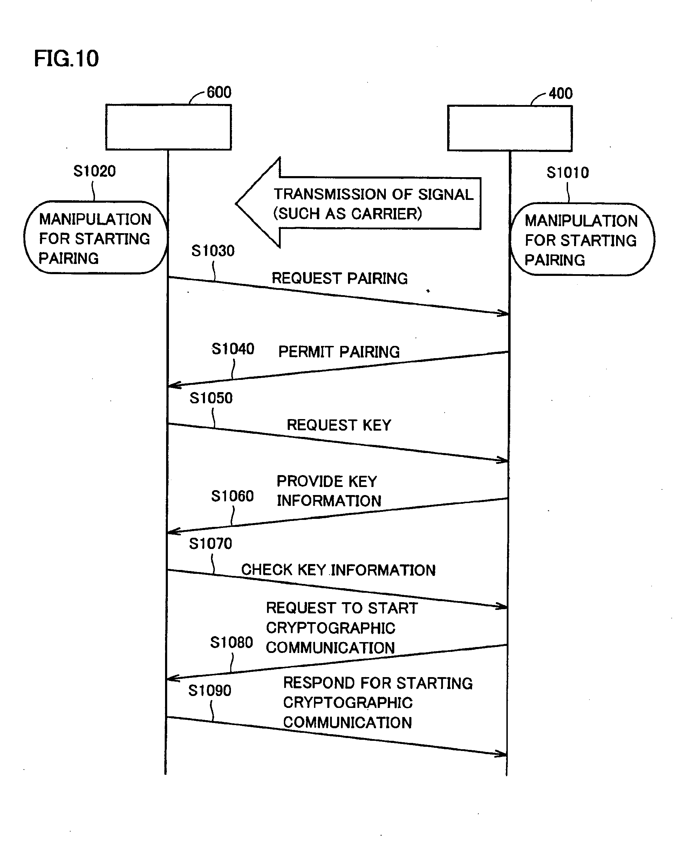

Next, with reference to Fig. 10, description will be made on pairing processing performed between PLC adapter 400 and PLC adapter 600. Fig. 10 is a sequence chart that represents a mode of pairing processing performed between PLC adapter 400 and PLC adapter 600. PLC adapter 400 functions as a master, and PLC adapter 600 functions as a slave, namely, a terminal that requests participation in the network

In step S1010, PLC adapter 400, which functions as a master, senses that manipulation for starting pairing has been performed, based on manipulation on a manipulation panel (not shown).

In step S1020, PLC adapter 600, which functions as a slave, senses that manipulation for starting pairing has been performed, based on manipulation on a manipulation panel (not shown). It does not matter which one of the timing at which the processing in step S1010 is executed and the timing at which the processing in step S1020 is executed precedes the other.

In step S1030, PLC adapter 600 generates a signal that represents a pairing request, in response to the manipulation for starting pairing, and transmits the generated signal to PLC adapter 400. Upon receiving the request, PLC adapter 400 authenticates PLC adapter 600, and determines whether or not pairing can be performed.

In step S1040, PLC adapter 400 generates a signal that represents permission for pairing, and transmits the signal to PLC adapter 600. In step S1050, PLC adapter 600, which functions as a slave, generates a signal that requests network data for participating in the network between PLC adapter 600 itself and PLC adapter 400, and transmits the generated signal to PLC adapter 400. Here, the network data includes a network ID, a cryptographic key, and data for identifying PLC adapter 400 in the network.

In step S1060, in response to the reception of the request signal, PLC adapter 400 reads out the relevant network data from ROM 430, generates a frame including the network data, and transmits the generated frame to PLC adapter 600.

When receiving the frame, PLC adapter 600 extracts the relevant network data from the frame, and stores the pieces of data in the regions (e.g. memory regions 720-750) reserved in advance in ROM 630.

In step S1070, PLC adapter 600 generates a frame including the received cryptographic key, and transmits the generated frame to PLC adapter 400. PLC adapter 400 extracts the cryptographic key from the received frame, and checks whether or not the cryptographic key is the same as the cryptographic key transmitted to PLC adapter 600.

In step S1080, PLC adapter 400 generates a request to start communication that uses encryption, and transmits the request to PLC adapter 600. In step S1090, in response to the reception of the request, PLC adapter 600 uses the cryptographic key (memory region 750) to thereby encrypt the data to be transmitted, and transmits a signal generated by the encryption to PLC adapter 400. The subsequent communication is encrypted and then decoded by the relevant cryptographic key, making it possible to perform cryptographic communication.

As described above, with the power line communication devices according to the embodiment of the present invention, the network data for participating in the communication network that uses the power line is transmitted from PLC adapter 400 that has the network data to PLC adapter 600 that seeks to newly participate in the network, via a transmission path other than the power line. At that time, before transmitting the network data to PLC adapter 600, PLC adapter 400 electrically interrupts the transmission path between plug 420 and ROM 430 in which the network data is stored. The interruption is implemented by switching of the switch, start of the filtering operation, and others.

PLC adapter 600, which seeks to obtain the relevant network data, interrupts the transmission path between plug 620 and RAM 626 or ROM 630, before obtaining the network data. Therefore, the data saved by PLC adapter 600 is prevented from being transmitted from plug 620 to power line 220.

By doing so, the relevant network data is no longer transmitted to power line 220, so that it is possible to add a new PLC adapter that configures communication network 200, while maintaining security.

It is noted that the configuration (e.g. a filter, a switch, and others) for preventing the network data from being transmitted to power line 220 is not limited to those shown in Figs. 4 and 6. For example, in PLC adapter 400 shown in Fig. 4, filter 425 may be provided between power line modem 424 and plug 420 Further, PLC adapter 400 may have a switch having a function similar to that of switch 625 included in PLC adapter 600, instead of filter 425.

In PLC adapter 600 shown in Fig. 6, switch 625 may be provided between power line modem 624 and ROM 630, or between analog front end 623 and plug 620. PLC adapter 600 may have a filter having a function similar to that of filter 425 included in PLC adapter 400, instead of switch 625.

### <First Modification>

Description will be made on a first modification of the present embodiment. A power line communication device according to the present modification differs from PLC adapter 600 shown in Fig. 6 in that the data for participating in communication network 200 can be obtained by a function other than the communication interface described above.

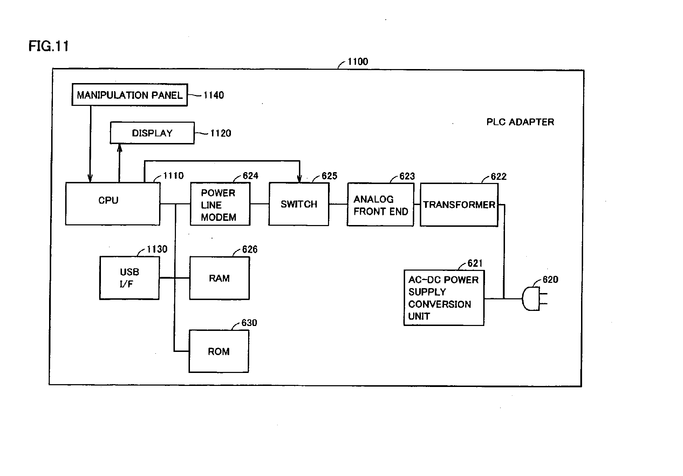

With reference to Fig. 11, description will be made on a configuration of a PLC adapter 1100 according to the present modification. Fig. 11 is a block diagram that represents a hardware configuration of PLC adapter 1100. PLC adapter 1100 has the same configuration as that shown in Fig. 6, except that it includes a CPU 1110, a display 1120, a USB (Universal Serial Bus) I/F (Interface) 1130, and a manipulation panel 1140, instead of CPU 610, network controller 627, and RJ45 connector 628.

CPU 110 controls an operation of PLC adapter 1100. Display 1120 displays data stored in RAM 626 or ROM 630, in accordance with the control of CPU 1110. Manipulation panel 1140 accepts manipulation on PLC adapter 1100, and transmits a signal corresponding to the manipulation to CPU 1110. Manipulation panel 1140 is implemented as, for example, a touch button or a push button, examples of which include a numeric keypad and others.

USB I/F 1130 accepts attachment of a USB memory (not shown). The USB memory stores network data. The network data is the one obtained from another power line communication device (e.g. PLC adapter 400) that has already participated in communication network 200. CPU 1110 obtains access to the relevant USB memory, reads out the above-described network data from the USB memory, and stores it in RAM 626. At this time, when sensing that the memory has been attached to USB I/F 1130, CPU 1110 outputs a switching signal for switch 625, and starts filtering processing on the network data in PLC adapter 1100. As a result, the network data transmitted from USB I/F 1130 is written to RAM 626, without being transmitted from power line modem 624 to analog front end 623. Accordingly, the network data obtained by PLC adapter 1100 is not delivered to power line 220 via plug 620, so that it is possible to safely obtain the data for participating in communication network 200.

As described above, with PLC adapter 1100 according to the present modification, when it has been sensed that the USB memory has been attached to USB I/F 1130, an output of the network data to an outside is interrupted. The network data stored in the USB memory can easily be captured. Therefore, even if a user of PLC adapter 1100 has no knowledge on data communication, the user can easily add a power line communication device to the communication network by using the USB memory.

When the network data is captured from the USB memory, display 1120 may display the captured data in accordance with display control by CPU 1110. By doing so, the data actually captured can easily be checked, so that it is possible to prevent erroneous setting to PLC adapter 1100.

It is noted that, although a USB memory is referred to as an example of a removable recording medium in the present modification, the recording medium may be a memory, examples of which include a memory card and others.

### <Second Modification>

Next, description will be made on a second modification of the present embodiment. A power line communication device according to the present modification differs from PLC adapter 400 shown in Fig. 4 in that it has, as a mode of outputting the network data, a mode of making an output to a removable recording medium or a function of displaying the network data, instead of the mode of using network controller 427.

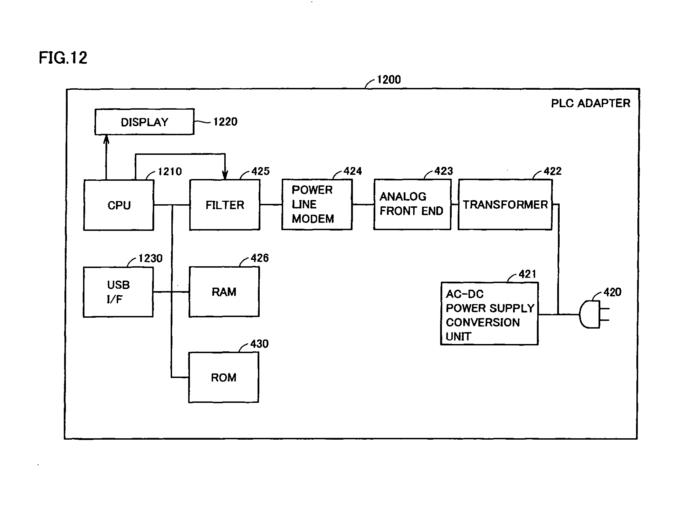

With reference to Fig. 12, description will be made on a configuration of a PLC adapter 1200 according to the present modification. Fig. 12 is a block diagram that represents a hardware configuration of PLC adapter 1200. PLC adapter 1200 has the same configuration as that of PLC adapter 400 shown in Fig. 4, except that it includes a CPU 1210, a display 1220, and a USB I/F 1230, instead of CPU 410, network controller 427, and RJ45 connector 428.

CPU 1210 senses that a USB memory (not shown) has been attached to USB I/F 1230, and in response to the sensing, starts a filtering operation by filter 425. As a result, after the USB memory is attached to USB I/F 1230, the transmission of data from ROM 430 to power line modem 424 is inhibited.

When confirming that the filtering operation is successfully conducted, CPU 1210 writes the network data, which is stored in ROM 430, to the USB memory. The output of the network data is thereby implemented.

Alternatively, in another aspect, CPU 1210 may display the data stored in ROM 430 on display 1220. In this case, when a user of PLC 1200 views the display, the user can input each value of the network data displayed on display 1220 to another PLC adapter which is to be newly added to the communication network, with use of a manipulation panel of the other PLC adapter.

Subsequently, when sensing that the USB memory has been detached from USB I/F 1230, CPU 1210 terminates the filtering operation by filter 425. Afterwards, the communication based on the data stored in ROM 430 can be performed via power line modem 424.

As described above, with PLC adapter 1200 according to the present modification, it becomes possible to transfer network data without using a transmission cable, while maintaining security.

It should be understood that the embodiment disclosed herein is illustrative and not limitative in all aspects. The scope of the present invention is shown not by the description above but by the scope of the claims, and is intended to include all modifications within the equivalent meaning and scope of the claims.

## Claims

1. A power line communication system (200), comprising a first power line communication device (111), and a second power line communication device (113),
said first power line communication device (111) including
a first power supply unit (310) for receiving a supply of power from a power line,
a first storage unit (313) for storing network data for connecting to a communication network which uses said power line,
a first detection unit (314) for detecting an output request of said network data,
a first control unit (312) for inhibiting said network data from being outputted from said power supply unit to an outside of said first power line communication device, in response to said output request, and
an output unit (315) for outputting said network data in response to an operation performed by said first control unit, and
said second power line communication device (113) including
a second power supply unit (320) for receiving a supply of power from said power line,
a second detection unit (324) for detecting an obtainment request of said network data,
a second control unit (322) for inhibiting data from being outputted from said second power supply unit to an outside of said second power line communication device, in response to the detection of said obtainment request,
an obtainment unit (325) for obtaining said network data from the outside of said second power line communication device, based on that said second control unit has inhibited the data from being outputted,
a second storage unit (323) for storing said network data obtained by said obtainment unit, and
a communication unit (321) for communicating with said communication network based on said network data.

2. The power line communication system according to claim 1, wherein said first control unit interrupts a transmission path between said first storage unit and said first power supply unit.

3. The power line communication system according to claim 1, wherein said second control unit interrupts a transmission path between said obtainment unit and said second power supply unit.

4. A power line communication device (111), comprising:
a power supply unit (310) for receiving a supply of power from a power line;
a storage unit (313) for storing network data for connecting to a communication network which uses said power line;
a detection unit (314) for detecting an output request of said network data;
a control unit (312) for inhibiting said network data from being outputted from said power supply unit to an outside of said power line communication device, in response to said output request; and
an output unit (315) for outputting said network data in response to an operation performed by said control unit.

5. The power line communication device according to claim 4, wherein said control unit interrupts a transmission path between said storage unit and said power supply unit.

6. The power line communication device according to claim 5, further comprising a switching unit for switching between opening and closing of the transmission path between said storage unit and said power supply unit, wherein
said control unit causes said switching unit to change a state of said transmission path from a closed state to an opened state.

7. The power line communication device according to claim 4, wherein said control unit includes a filter unit for dropping said network data from a signal transmitted to said power supply unit for transmission to said power line.

8. The power line communication device according to claim 4, wherein said detection unit detects said output request based on a signal inputted to said power line communication device.

9. The power line communication device according to claim 4, further comprising a manipulation unit for accepting manipulation on said power line communication device, and outputting a manipulation signal corresponding to said manipulation, wherein
said detection unit detects said output request based on said manipulation signal.

10. The power line communication device according to claim 4, wherein
said output unit includes a communication interface unit for accepting connection of a communication line, and outputting said network data, and
said communication interface unit outputs said network data based on that said network data has been inhibited from being outputted from said power supply unit to the outside of said power line communication device.

11. The power line communication device according to claim 4, wherein
said output unit includes a drive unit for writing said network data to a removable recording medium for storing data, and
said drive unit outputs said network data based on that said network data has been inhibited from being outputted from said power supply unit to the outside of said power line communication device.

12. The power line communication device according to claim 4, wherein
said output unit includes a display unit for displaying said network data, and
said display unit displays said network data based on that said network data has been inhibited from being outputted from said power supply unit to the outside of said power line communication device.

13. A power line communication device (113), comprising:
a power supply unit (320) for receiving a supply of power from a power line;
a detection unit (324) for detecting an obtainment request of network data for connecting to a communication network which uses said power line;
a control unit (322) for inhibiting data from being outputted from said power supply unit to an outside of said power line communication device, in response to the detection of said obtainment request;
an obtainment unit (325) for obtaining said network data from the outside of said power line communication device, based on that said control unit has inhibited the data from being outputted;
a storage unit (323) for storing said network data obtained by said obtainment unit; and
a communication unit (321) for communicating with said communication network based on said network data.

14. The power line communication device according to claim 13, wherein said control unit interrupts a transmission path between said obtainment unit and said power supply unit.

15. The power line communication device according to claim 14, further comprising a switching unit for switching between opening and closing of the transmission path between said obtainment unit and said power supply unit, wherein
said control unit causes said switching unit to change a state of said transmission path from a closed state to an opened state.

16. The power line communication device according to claim 13, wherein said control unit includes a filter unit for dropping said network data from a signal transmitted to said power supply unit for transmission to said power line.

17. The power line communication device according to claim 13, wherein said detection unit detects said obtainment request based on a signal inputted to said power line communication device.

18. The power line communication device according to claim 13, further comprising a manipulation unit for accepting manipulation on said power line communication device, and outputting a manipulation signal corresponding to said manipulation, wherein
said detection unit detects said obtainment request based on said manipulation signal.

19. The power line communication device according to claim 13, wherein said obtainment unit includes an interface unit for receiving connection of a communication line.

20. The power line communication device according to claim 13, wherein said obtainment unit includes
a drive unit for receiving attachment of a recording medium for storing data, and
a read unit for reading out said network data from said recording medium based on that said data has been inhibited from being outputted.

21. The power line communication device according to claim 13, wherein said obtainment unit includes a manipulation unit for receiving an input of an operational instruction to said power line communication device.
